Europäisches Patentamt

(19) European Patent Office

Office européen des brevets

(11) **EP 0 592 958 B1**

(12) **EUROPEAN PATENT SPECIFICATION**

(45) Date of publication and mention
of the grant of the patent:
**15.04.1998 Bulletin 1998/16**

(51) Int. Cl.$^6$: **C01B 3/22**, B01J 23/80

(21) Application number: **93116321.6**

(22) Date of filing: **08.10.1993**

(54) **A process and a catalyst for producing of hydrogen**

Verfahren und Katalysator zur Herstellung von Wasserstoff

Procédé et catalyseur pour la production d'hydrogène

(84) Designated Contracting States:
**ES FR GB IT**

(30) Priority: **12.10.1992 JP 272955/92**

(43) Date of publication of application:
**20.04.1994 Bulletin 1994/16**

(73) Proprietor:
**MITSUBISHI GAS CHEMICAL COMPANY, INC.**
**Chiyoda-ku, Tokyo (JP)**

(72) Inventors:
• **Yoneoka, Mikio,**
c/o Mitsubishi Gas Chem. Co., Inc.
**Tayuhama, Niigata-shi, Niigata-ken (JP)**
• **Watabe, Kumiko,**
c/o Mitsubishi Gas Chem. Co., Inc.
**Tayuhama, Niigata-shi, Niigata-ken (JP)**
• **Yamagishi, Ken,**
c/o Mitsubishi Gas Chem. Co., Inc.
**Tayuhama, Niigata-shi, Niigata-ken (JP)**

• **Osugi, Minoru,**
c/o Mitsubishi Gas Chem. Co., Inc.
**Niigata-shi, Niigata-ken (JP)**

(74) Representative:
**Kraus, Walter, Dr. et al**
**Patentanwälte Kraus, Weisert & Partner**
**Thomas-Wimmer-Ring 15**
**80539 München (DE)**

(56) References cited:
**US-A- 3 637 528**

• **DATABASE WPI Week 9211, Derwent**
**Publications Ltd., London, GB; AN 92--084811 &**
**JP-A-4 027 434 (MITSUBISHI HEAVY IND KK) 30**
**January 1992**
• **DATABASE WPI Week 9151, Derwent**
**Publications Ltd., London, GB; AN 91-372692 &**
**JP-A-3 249 943 (MITSUBISHI HEAVY IND KK) 7**
**November 1991**

**Description**

BACKGROUND OF THE INVENTION

1. Field of the invention

The present invention relates to a process for the producing of hydrogen by methanol steam reforming process and a catalyst used for the process.

Hydrogen gas is used for various purposes, for example, ammonia synthesis, hydrogenation of organic compounds, oil refinery and desulfurization in the chemical industry, in the metallurgical industry and in the semi-conductor industry.

Recently, hydrogen is expected to became a new energy resource with the development of fuel cells. So, the demand for hydrogen is increasing.

2. Description of the Prior Art.

so far, hydrogen may be produced by applying the steam reforming process on such hydrocarbons as natural gas, liquid petroleum gas and naphtha. This hydrocarbon steam reforming process is generally not suitable for application in small or middle sized plants because 1) the supply of these hydrocarbons is not stable and the costs are changeable, 2) processes for the desulfurization of these hydrocarbons are required and 3) the plant cost for the hydrocarbon steam reforming process is high because of the necessity of maintaining a high reforming temperature of 800 - 1000 °C.

Some characteristics of the methanol steam reforming process are that the raw materials of methanol may easily be supplied and that the plant cost is inexpensive because of the low reforming temperature of 300 °C or lower and because there is no need for the desulfurization. For this reason many small or middle sized methanol reforming plants are built adjacent to the plants using hydrogen.

The main reaction formula of the methanol steam reforming process is shown in (1). The reverse-shift reaction of formula (2) occurs simultaneously, so that some of the hydrogen produced is consumed to produce carbon monoxide.

$$CH_3 OH + H_2 O \rightarrow 3H_2 + CO_2 \tag{1}$$

$$CO_2 + H_2 \rightarrow CO + H_2 O \tag{2}$$

As the result, the reformed gas contains some carbon monoxide which is difficult to separate out. In the view of thermodynamic equilibrium, the reaction of formula (2) and the content of carbon monoxide is reduced at a lower reaction temperature and at a higher ratio of steam to methanol.

Therefore, a lower reaction temperature is required in order to reduce the carbon monoxide content. Although the increase of the ratio of steam to methanol lowers the carbon monoxide content, large amounts of energy are required for vaporization of water where large amounts of steam are used in the methanol steam reforming process. Thus, the molar ratio of steam to methanol is set at nearly one(1.0) for industrial methanol steam reforming plants.

Various catalysts for the methanol steam reforming process are proposed. For example, a Cu-Cr-Mn catalyst is described in Japanese Patent Publication No. 11274/1979, a Cu-Zn-Al catalyst in Japanese Laid Open No. 47281/1974, a Cu-Zn-Al-Th catalyst in U.S. Patent No. 4091068 and a Cu-Zn-Al-Cr catalyst in Japanese Laid Open No. 56302/1982.

The catalyst for the methanol steam reforming process requires a high activity at low temperature and a long catalyst life for industrial use in order to decrease the formation of carbon monoxide as mnch as possible with the molar ratio of steam to methanol being set to nearly one(1).

In other words, a catalyst for the methanol steam reforming process is required which exhibits 1) enough activity to react at low temperature, 2) a small decrease of activity with long term operation and 3) adequate mechanical strength to avoid destruction or powderization with long term operation.

The Cu-Cr-Mn catalyst described in Japanese Patent Publication No. 11274/1979 does not exhibit enough avtivity at high space velocity and the possibility of a adverse effects on the human body resulting from exposure during charging or disposing of the catalyst due to the presence of chromium.

The Cu-Zn containing catalysts described in Japanese Laid Open No. 47281/1974, U.S. Patent No. 4091068 and Japanese Laid Open No. 56302/1982 are impossible to use industrially over a long period because these catalysts do not posses sufficient mechanical strength even though they exhibit enough activity at low temperature.

## EP 0 592 958 B1

SUMMARY OF THE INVENTION

The inventors have been engaged in intensive research of catalysts for the methanol steam reforming process. It has been found that catalysts containing copper, zinc and, optionally, boron and/or aluminum exhibit improved catalyst strength and activity when a certain amount of diatomaceous earth is added, and that these catalysts are industrially promising because hydrogen can be produced stably for a long period of time by using these catalysts.

Thus, the present invention provides a process and a catalyst which comprises the production of hydrogen containing gas through steam reforming of methanol using a catalyst comprising copper oxide and zinc oxide and opotionally boron oxide and/or aluminum oxide but no nickel oxide and no colloidal silica, along with diatomaceous earth in an amount equal to from 1 to 5% by weight of the sum of the weight of the oxides.

DETAILED DESCRIPTION OF THE INVENTION

The production method for the catalyst of the present invention is not limited as long as it contains copper oxide, zinc oxide, and optionally, boron oxide and/or aluminum oxide, along with diatomaceous earth in a defined ratio, the presence of nickel oxide and colloidal silica being excluded.

Generally the catalyst is produced by one of the following methods: 1) mixing uniformly prepowdered copper oxide, zinc oxide, diatomaceous earth and optionally boron oxide, 2) mixing uniformly prepowdered copper oxide, zinc oxide, diatomaceous earth, and boron oxide and/or aluminum oxide, 3) co-precipitating by the addition of an alkali metal hydroxide, an alkali metal carbonate or an alkali metal hydrocarbonate to the mixed aqueous solution containing copper, zinc and optionally boron, and calcining the co-precipitate in air to obtain a mixture of the oxides, 4) co-precipitating by adding an alkali metal hydroxide, an alkali metal carbonate or an alkali metal hydrocarbonate to a mixed aqueous solution of copper, zinc, aluminum and/or boron, and calcining the co-precipitate in air to obtain mixture of the oxides. The diatomaceous earth may be added either before co-precipitation or after co-precipitation in 3) and 4).

Actually, the catalyst is preferably produced, for example, by the following methods: 1) preparing a precipitate from a mixed aqueous solution containing copper, zinc and aluminum in alkali solution, and optionally adding a water soluble boron compound, washing the filtered precipitate and adding a diatomaceous earth, and calcining the mixed precipitate to obtain a mixture of oxides, 2) washing the same filtered precipitate as in 1, drying and calcining the precipitate, crushing and adding powdered diatomaceous earth to obtain a mixture of oxides, 3) preparing a precipitate from a mixed aqueous solution containing copper and zinc in an alkali solution, to which optionally a water soluble boron compound has been added, washing the filtered precipitate, adding a diatomaceous earth with aluminum oxide or hydroxide, and calcining the mixed precipitate to obtain the mixture of oxides, 4) preparing a precipitate from a mixed aqueous solution of copper and zinc in the alkali solution, to which optionally a water soluble boron compound has been added, washing the filtered precipitate, adding aluminum oxide or hydroxide, calcining the mixed precipitate, crushing the calcined precipitate and adding diatomaceous earth to obtain the mixture of oxides, 5) mixing a powder of diatomaceous earth with an aqueous solution containing copper, zinc, and optionally adding a water soluble boron compound, preparing a precipitate by adding an alkali solution, washing the filtered precipitate, adding aluminum oxide or hydroxide, and calcining the mixed precipitate to obtain the mixture of oxides, 6) mixing a powder of diatomaceous earth with an aqueous solution of copper, zinc, aluminum, and optionally adding a water soluble boron compound, preparing a precipitate by adding an alkali solution, washing the filtered precipitate, and calcining the mixed precipitate to obtain the mixture of oxides.

The grade of the compounds used as raw materials of each component is not limited. So the compounds of special grade reagents to industrial chemicals may be used as raw materials of each component.

The atomic ratio of zinc to copper is from 0.2/1 to 2.0/1, preferably from 0. 3/1 to 1.5/1; the atomic ratio of aluminum to copper is from 0.01/1 to 0.1/1, preferably from 0.02/1 to 0.07/1; and the atomic ratio of boron to copper is from 0.01/1 to 1.5/1 preferably from 0.02/1 to 1/1.

The amount of diatomaceous earth used in the present invention is from 1.0 to 5 weight percent of the total weight of the oxides. The mechanical strength of the catalyst is reduced when the amount of diatomaceous earth is too small. However, sufficient mechanical strength of the catalyst is obtained at about one(1) weight percent of diatomaceous earth. When the amount of diatomaceous earth is too large, the activity of the catalyst is reduced because of the decrease in the content of active components, and, additionally, sometimes the molding of the catalyst becomes difficult because the density of the powder decreases.

These active components may be supported on a such well-known carriers as activated carbon, silica gel and alumina. The catalysts of this invention are produced by molding these active components, with a lubricant such as graphite as needed, using a multi-hole plate or a tablet machine.

The molded catalyst is used in the methanol steam reforming reaction after the catalyst has been activated by reduction. The reduction may be carried out by heating the catalyst to 150 - 400°C in such a reductive gas as hydrogen gas, carbon monoxide gas or a mixture of them. The reduction may also be carried out by addition of hydrogen and/or carbon monoxide gas produced by bringing methanol vapor or a mixture of methanol vapor and steam into contact with

3

the heated catalyst.

The molar ratio of steam to methanol in the methanol steam reforming reaction is between 1 and 30 and preferably between 1 and 5. The space velocity of the mixed vapor of methanol and steam is 50 - 50,000/hr and preferably 100 - 15,000/hr.

The temperature of the reaction is 150 - 400°C and preferably 180 - 350 °C, and the pressure is between atmospheric pressure and 5.1 MPa (50 kg/cm$^2$G). Optionally hydrogen, carbon monoxide, carbon dioxide or nitrogen gas may be added in a molar ratio of 0.1 to 5, to methanol.

High purity hydrogen gas is produced by removing carbon dioxide from the reformed gas obtained by methanol steam reforming. An aqueous solution of sodium carbonate, potassium carbonate and aminoethylalcohol or active carbon is used for the removal of carbon dioxide. The hydrogen gas produced contains a very small amount of carbon monoxide and some inert components which come from the raw material. These components are usually removed by the Pressure Swing Absorption hydrogen purification method wherein these impure components of hydrogen are absorbed by an absorber using pressure characteristics of absorption.

In the present invention, industrial production of hydrogen can be carried out favourably because 1) the catalyst of this invention has high activity at comparatively low temperatures, 2) the lowering of the activity of the catalyst when used for a long period is quite small, 3) a high mechanical strength is maintained even when used for a long period, 4) a reformed gas which is actually the mixture of hydrogen and carbon dioxide containing little or no of carbon monoxide can be obtained stably for a long period and so 5) the cost for purification of hydrogen is low.

## EXAMPLES

The present invention will be explained in more detail by the following examples, which by no means limit the scope of the invention.

(Preparation of catalyst)

### COMPARATIVE CATALYST 1

Cupric nitrate trihydrate (195.0g) and zinc nitrate hexahydrate (48.0g) were dissolved in 2.0 liters of deionized water and maintained at 40°C. A solution of ammonium bicarbonate (168.5g) in 2.0 liters of deionized water, maintained at 40°C, was added to the cupric nitrate and zinc nitrate solution under stirring to cause co-precipitation. After the precipitate was filtered and washed, it was dried at 110°C and calcined for 2 hours at 380°C. The calcined substance was pulverized and 3% by weight of graphite was added. The product was molded into pallets with a diameter of 5 mm and a height of 5 mm to form a catalyst. This catalyst of copper oxide and zinc oxide shall be referred to as COMP. CAT. 1.

### COMPARATIVE CATALYST 2

Cupric nitrate trihydrate (195.0g) and zinc nitrate hexahydrate (48.0g) were dissolved in 2.0 liters of deionized water and maintained at 40°C. A solution of sodium carbonate anhydride (122.9g) in 1.6 liters of deionized water, maintained at 40°C, was added to the cupric nitrate and zinc nitrate solution under stirring to cause co-precipitation. The molded catalyst of copper oxide and zinc oxide was prepared by the same methods as were in COMPARATIVE CATALYST 1. This catalyst shall be referred to as COMP. CAT. 2.

### CATALYST 1

Cupric nitrate trihydrate (195.0g) and zinc nitrate hexahydrate (48.0g) were dissolved in 2.0 liters of deionized water, and diatomaceous earth (0.77g) was added to form a slurry which was maintained at 40 °C. A solution of ammonium bicrbonate (168.5g) in 2.0 liters of deionized water, maintained at 40 °C, was added to the cupric nitrate and zinc nitrate solution under stirring to cause co-precipitation After the precipitate was filtered and washed, it was dried at 110°C and calcined for 2 hours at 380°C. The calcined substance was pulverized and 3% by weight of graphite was added. The product was molded into pellets with a diameter of 5 mm and a height of 5 mm to form a catalyst. This catalyst of copper oxide and zinc oxide shall be referred to as CAT. 1.

### COMPARATIVE CATALYST 3

Ammonium bicarbonate (1.4kg) was dissolved to 14.0 liters of deionized water and maintained at 40 °C. A solution of cupric nitrate trihydrate (1.5kg) and boric acid (188g) in 13.0 liters of deionized water was added to the ammonium bicarbonate solution under stirring, and this was added a slurry of zinc oxide obtained by dispersing zinc oxide (494g) in 5.0 liters of deionized water, maintained at 40 °C, and through which 60 liters per hour of carbon oxide were bubbled. After 60 minutes, the solution was heated to 80 °C over 20 minutes, maintained at this temperature for 20 minutes and then cooled to room temperature. The blowing of carbon dioxide was stopped 10 minutes after the solution reached the temperature of 80°C. The precipitate was dried at 110°C and calcined for 2 hours at 380°C. The calcined substance was pulverized. A catalyst was prepared by molding part of the powder obtained using the same method as were used to make COMPARATIVE CATALYST 1. This catalyst shall be referred to as COMP. CAT. 3.

CATALYST 2

Diatomaceous earth (1% by weight) and graphite (3% by weight) were added to the powder of copper oxide and zinc oxide obtained using the methods of COMPARATIVE CATALYST 3 and the resulting mixture was molded to produce pellets having a diameter of 5 mm and a height of 5 mm to form a catalyst. This catalyst shall be referred to as CAT. 2.

CATALYST 3

CAT.3 was prepared using the same method as were used to make CATALYST 2 except that 3% by weight of diatomaceous earth and 3% by weight of graphite were added.

CATALYST 4

CAT.4 was prepared using the same method as were used to make CATALYST 2 except that 5% by weight of diatomaceous earth and 3% by weight of graphite were added.

COMPARATIVE CATALYST 4

Cupric nitrate trihydrate (1.95kg), zinc nitrate hexahydrate (3.19kg) and boric acid (250.0g) were dissolved in 19 liters of deionized water and maintained at 70 °C. A solution of sodium carbonate anhydride (2.39kg) in 2.0 liters of deionized water, maintained at 70°C, was added to the cupric nitrate and zinc nitrate solution under stirring to cause coprecipitation. After the precipitate was filtered and washed, the cake was divided into two parts. One part of the cake was added to 44g of alumina sol (manufactured by Nissan Chemical Co.) and kneaded for one hour. The paste obtained was dried at 110 °C and calcined for 2 hours at 380°C. The calcined substance was pulverized and molded by the same methods as were used to make COMPARATIVE CATALYST 1. This catalyst shall be referred to as COMP. CAT. 4.

CATALYST 5

To the other part of the cake obtained in COMPARATIVE CATALYST 4, 44g of alumina sol (manufactured by Nissan Chemical Co.) and 7.62g of diatomaceous earth were added and kneaded for one hour. The paste obtained was dried at 110 °C and calcined for 2 hours at 380°C. The calcined substance was pulverized, 3% by weight of graphite were added and it was molded into with a diameter of 5 mm and a height of 5 mm to form a catalyst. This catalyst which contains alumina and diatomaceous earth shall be referred to as CAT. 5.

COMPARATIVE CATALYST 5

Sodium carbonate anhydride (154.8g) was dissolved in 3.0 liters of deionized water and maintained at 40 °C. A solution of cupric sulfate pentahydrate (100.0g ), zinc nitrate hexahydrate (238.0g) and aluminum nitrate nonahydrate (4. 5g) in 3.0 liters of deionized water was added to the sodium carbonate solution at 40°C under stirring and maintained for one hour at 40 °C. The solution was heated to 70 °C maintained for 30 minutes and cooled to room temperature. The precipitate was filtered, washed and fashioned into a catalyst by the same method as were used in COMPARATIVE CATALYST 1. This catalyst shall be referred to as COMP. CAT. 5.

CATALYST 6

Cupric sulfate pentahydrate (100.0g), zinc nitrate hexahydrate (238.0g) and aluminum nitrate (4.5g) was dissolved to 2.5 liters of deionized water and maintained at 40 °C. A solution of sodium carbonate anhydride (15.48g) in 3.0 liters of deionized water, maintained 40 °C, was added to the cupric sulfate and zinc nitrate solution under stirring and maintained for one hour. The solution was heated to 70 °C, 1.0g of diatomaceous earth was added after 30 minutes, the solution was stirred 5 minutes and cooled to room temperature. CAT. 6 was then fashioned into a catalyst using the same method as were used in COMPARATIVE CATALYST 5.

COMPARATIVE CATALYST 6

Sodium carbonate dehydrate (125kg) was dissolved to 1350 liters of deionized water and maintained at 40 °C. A solution of cupric nitrate trihydrate (240kg) and boric acid (25kg) in 1700 liters of deionized water, and a slurry maintained at 40°C obtained by dispersing 60kg of zinc oxide in 600 liters deionized water, were added to the sodium carbonate solution under stirring, and carbon dioxide was bubbled through the solution at 5.5 m$^3$/hour. The solution was heated to 80 °C and maintained for 30 minutes to cause precipitation. The blowing of carbon dioxide was stopped 2 hours after the initiation of heating. The precipitate obtained was filtered, washed, added to 80kg of alumina sol (manufactured by Nissan Chemical Co.) and 80 liters of deionized water, and kneaded for one hour. The paste obtained was dried at 110 °C and calcined for 2 hours at 380°C. The calcined substance was pulverized and 3% by weight of graphite was added, after which it was molded to form pellets with a diameter of 5 mm and a height of 5 mm to form a catalyst. This catalyst shall be referred to as COMP. CAT. 6. (Strength Test)

The compressive strength and powdered ratio of each catalyst were measured and the values obtained. The compressive strength was measured using a small-sized material tester (Model PSP-100, manufactured by Fujii Seisakusho Co. Ltd). The powdered ratio was measured by the following method:

Ten(10) grams of catalyst either before reduction or after reduction were charged to a cylindrical drum having a diameter of 100 mm with a metal screen of JIS 6 mesh spread over its open end, and the drum was rotated for 20 minutes at 160 rpm. The powdered ratio was calculated from the amount of catalyst remaining in the drum by the following equation:

$$\text{Powdered ratio(\% by weight)} = \frac{\text{Charged sample(g) - Amount remaining in the drum(g)}}{\text{Charged sample(g)}} \times 100$$

The result of mechanical strength tests of the each catalyst whether diatomaceous earth was a component or not is shown in Table 1. The catalysts to which sufficient diatomaceous earth was added have sufficient compressive strength and a low enough powdered ratio to serve effectively as a methanol steam reforming catalyst.

Table 1

|  | Addition of diatomaceous earth | Before reduction | | After reduction | |
|---|---|---|---|---|---|
|  |  | Powdered ratio (wt%) | Compressive strength (kg/cm$^2$) | Powdered ratio (wt%) | Compressive strength (kg/cm$^2$) |
| COMP. CAT. 1 | no | 13.7 | 271 | 19.6 | 242 |
| COMP. CAT. 2 | no | 16.3 | 288 | 20.2 | 255 |
| CAT. 1 | 1 wt% | 6.3 | 279 | 2.8 | 295 |
| COMP. CAT. 3 | no | 10.9 | 287 | 12.7 | 250 |
| CAT. 2 | 1 wt% | 7.9 | 277 | 3.3 | 284 |
| CAT. 3 | 3 wt% | 6.9 | 264 | 3.7 | 298 |
| CAT. 4 | 5 wt% | 7.0 | 272 | 2.8 | 285 |
| COMP. CAT.4 | no | 20.6 | 289 | 31.4 | 277 |
| CAT. 5 | 1 wt% | 5.3 | 275 | 2.7 | 291 |
| COMP. CAT. 5 | no | 30.6 | 277 | 49.5 | 246 |
| CAT. 6 | 1 wt% | 7.7 | 270 | 3.6 | 289 |
| COMP. CAT. 6 | no | 3.3 | 210 | 2.3 | 216 |

(Activity Test)

Catalysts were pulverized to grains with a size of 20 - 32 mesh and 0.3 cc of the pulverized catalyst was filled into a test reactor of 8 mm inner diameter. Then the catalyst was reduced with hydrogen gas at 170 °C. Activity tests were carried out at a steam/methanol mol ratio of 2.0, a space velocity of 150000/hr, a temperature of 300 °C and atmospheric pressure. The conversion of methanol after operation for 2, 10 and 16 hours is shown in Table 2.

Table 2

|  | Addition of diatomaceous earth | Conversion of methanol(mol%) (operation time at 300°C) | | |
|---|---|---|---|---|
|  |  | 2 hr | 10 hr | 16 hr |
| COMP. CAT. 1 | no | 54 | 49 | 48 |
| CAT. 1 | 1 wt% | 55 | 49 | 49 |
| COMP. CAT. 3 | no | 47 | 43 | 41 |
| CAT. 2 | 1 wt% | 47 | 43 | 43 |
| CAT. 4 | 5 wt% | 46 | 44 | 42 |
| COMP. CAT.4 | no | 42 | 38 | 38 |
| CAT. 5 | 1 wt% | 43 | 39 | 38 |
| COMP. CAT. 5 | no | 37 | 32 | 30 |
| CAT. 6 | 1 wt% | 36 | 33 | 32 |

(Life Test)

In order to determine the life of CAT. 2, 5, and COMP. CAT. 6, each catalyst was divided into quarters and 20 - 32 cc of each of the catalysts were filled into a test reactor of 20 mm inner diameter. Then the catalysts were reduced with hydrogen gas at 170 °C. Life Tests were carried out at a steam/methanol mol ratio of 2.0, a space velocity of 3000/hr, a temperature of 300°C and a pressure of 0.9 MPa for 90 days. The conversion of methanol (mol%) and content of carbon monoxide (mol%) at 5, 30, 50, 70 and 90 days operation are shown in Table 3.

Table 3

| Catalyst | Operation days | 5 | 30 | 50 | 70 | 90 |
|---|---|---|---|---|---|---|
| CAT. 2 | Methanol conversion % | 95.1 | 94.3 | 92.3 | 92.1 | 92.1 |
|  | CO content of outlet gas % | 0.57 | 0.57 | 0.56 | 0.54 | 0.53 |
| CAT. 5 | Methanol conversion % | 94.7 | 94.1 | 93.4 | 92.9 | 92.3 |
|  | CO content of outlet gas % | 0.59 | 0.62 | 0.56 | 0.55 | 0.54 |
| COMP. CAT. 6 | Methanol conversion % | 90.9 | 89.5 | 88.6 | 87.3 | 85.9 |
|  | CO content of outlet gas % | 0.55 | 0.53 | 0.52 | 0.51 | 0.50 |

**Claims**

1. A process for producing hydrogen which comprises the production of hydrogen containing gas through steam reforming of methanol at a temperature of 180 to 350 °C and a pressure of 0 to 50 kg/cm$^2$ G (5.1 MPa) using a catalyst comprising copper oxide, zinc oxide and optionally boron oxide and/or aluminum oxide but no nickel oxide along with diatomaceous earth in an amount equal to from 1 to 5% by weight of the sum of the weight of the oxides.

2. A catalyst for producing hydrogen by steam reforming of methanol comprising copper oxide and zinc oxide and optionally boron oxide and/or aluminum oxide but no nickel oxide and no colloidal silica, along with diatomaceous earth in an amount equal to from 1 to 5% by weight of the sum of the weight of the oxides, wherein the atomic ratio of zinc to copper is from 0.2/1 to 2.0/1, the atomic ratio of aluminum to copper is from 0.01/1 to 0.1/1 and the atomic ratio of boron to copper is from 0.01/1 to 1.5/1.

3. A catalyst of claim 2 wherein the atomic ratio of zinc to copper is from 0.3/1 to 1.5/1, the atomic ratio of aluminum to copper is from 0.02/1 to 0.07/1 and the atomic ratio of boron to copper is from 0.02/1 to 1/1.

**Patentansprüche**

1. Verfahren zur Herstellung von Wasserstoff, umfassend die Herstellung eines Wasserstoff-enthaltenden Gases durch Wasserdampfreformierung von Methanol bei einer Temperatur von 180 bis 350°C und einem Druck von 0 bis 50 kg/cm$^2$ G (5,1 MPa) unter Verwendung eines Katalysators, umfassend Kupferoxid, Zinkoxid und gegebenenfalls Boroxid und/oder Aluminiumoxid, aber kein Nickeloxid, zusammen mit Diatomeenerde in einer Menge von 1 bis 5 Gew.-% der Summe der Gewichtsmengen der Oxide.

2. Katalysator zur Herstellung von Wasserstoff durch Wasserdampfreformierung von Methanol, umfassend Kupferoxid und Zinkoxid und gegebenenfalls Boroxid und/oder Aluminiumoxid, jedoch kein Nickeloxid und kein kolloidales Siliciumoxid, zusammen mit Diatomeenerde in einer Menge von 1 bis 5 Gew.-% der Summe der Gewichtsmengen der Oxide, wobei das Atomverhältnis von Zink zu Kupfer 0,2/1 bis 2,0/1, das Atomverhältnis von Aluminium zu Kupfer 0,01/1 bis 0,1/1 und das Atomverhältnis von Bor zu Kupfer 0,01/1 bis 1,5/1 beträgt.

3. Katalysator nach Anspruch 2, dadurch **gekennzeichnet,** daß das Atomverhältnis von Zink zu Kupfer 0,3/1 bis 1,5/1, das Atomverhältnis von Aluminium zu Kupfer 0,02/1 bis 0,07/1 und das Atomverhältnis von Bor zu Kupfer 0,02/1 bis 1/1 beträgt.

**Revendications**

1. Procédé pour la production d'hydrogène qui comprend la production d'un gaz contenant de l'hydrogène par reformage à la vapeur du méthanol à une température de 180 à 350°C et une pression de 0 à 50 kg/cm$^2$ (5,1 MPa) par utilisation d'un catalyseur comprenant de l'oxyde de cuivre, de l'oxyde de zinc et éventuellement de l'oxyde de bore et/ou de l'oxyde d'aluminium mais pas d'oxyde de nickel, avec une terre d'infusoire en une quantité égale à 1 à 5% en poids de la somme du poids des oxydes.

2. Catalyseur pour la production d'hydrogène par reformage à la vapeur du méthanol comprenant de l'oxyde de cuivre et de l'oxyde de zinc et éventuellement de l'oxyde de bore et/ou de l'oxyde d'aluminium mais pas d'oxyde de nickel et pas de silice colloïdale, avec une terre d'infusoire en une quantité égale à 1 à 5% en poids de la somme du poids des oxydes, dans lequel le rapport atomique du zinc au cuivre est de 0,2/1 à 2,0/1, le rapport atomique de l'aluminium au cuivre est de 0,01/1 à 0,1/1 et le rapport atomique du bore au cuivre est de 0,01/1 à 1,5/1.

3. Catalyseur suivant la revendication 2, dans lequel le rapport atomique du zinc au cuivre est de 0,3/1 à 1,5/1, le rapport atomique de l'aluminium au cuivre est de 0,02/1 à 0,07/1 et le rapport atomique du bore au cuivre est de 0,02/1 à 1/1.